# EUROPÄISCHE PATENTANMELDUNG

(11) **EP 4 647 389 A1**
(43) Veröffentlichungstag der Anmeldung: **12.11.2025**
(21) Anmeldenummer: 25163078.6
(22) Anmeldetag: 11.03.2025
(51) Int. Cl.: B66D 1/36, B66D 1/48, B66D 1/54, G01N 21/952

(54) **VORRICHTUNG UND VERFAHREN ZUR ÜBERWACHUNG EINER SEILWINDE**

(30) Priorität: 08.05.2024 DE 102024112998
(71) Anmelder: Liebherr-Werk Nenzing GmbH, 6710 Nenzing (AT)
(72) Erfinder: JUSSEL, Patrick, 6167 Ludesch (AT); NUEBEL, Falk, 6710 Nenzing (AT)
(74) Vertreter: Laufhütte, Dieter

(57) **Zusammenfassung**

Die Erfindung betrifft eine Vorrichtung zur Überwachung des Wickelverhaltens eines Seils auf einer Seilwinde, umfassend eine Seilwinde, insbesondere Mehrlagenwinde, mit einer drehbaren Seiltrommel, auf der ein Seil auf- und abwickelbar gelagert ist, und mindestens eine Sensoreinheit, welche zweidimensionale Aufnahmen von Seilwindungen auf der Seiltrommel aufzeichnet. Erfindungsgemäß umfasst die Vorrichtung eine Analyseeinheit, welche die Aufnahmen der mindestens einen Sensoreinheit empfängt und dazu eingerichtet ist, mindestens zwei unterschiedliche, jeweils mindestens eine Seilwindung ganz oder teilweise abbildende Analyseregionen in den Aufnahmen zu definieren und diese unabhängig voneinander auf ein Vorliegen einer fehlerhaften Seilwicklung zu analysieren. Die Erfindung betrifft ferner eine Arbeitsmaschine, vorzugsweise einen Kran, ein Tiefbaugerät oder einen Seilbagger, mit einer erfindungsgemäßen Vorrichtung. Die Erfindung betrifft weiterhin ein Verfahren zur Überwachung des Wickelverhaltens eines Seils auf einer Seilwinde einer erfindungsgemäßen Vorrichtung sowie ein entsprechendes Computerprogrammprodukt.

## Beschreibung

Die vorliegende Erfindung betrifft eine Vorrichtung zur Überwachung des Wickelverhaltens eines Seils auf einer Seilwinde gemäß dem Oberbegriff des Anspruchs 1, sowie ein entsprechendes Überwachungsverfahren und ein Computerprogrammprodukt.

Seilwinden mit Seiltrommeln zur Lagerung und zum Ab- und Aufwickeln von Seilen sind in unzähligen Varianten und für zahlreiche Funktionen aus dem Stand der Technik bekannt. So sind häufig Arbeitsmaschinen mit Seilwinden ausgestattet, über die beispielsweise Hubseile zum Heben oder Senken von Lasten oder Seilabspannungen zum Bewegen von Auslegern oder Auslegerteilen betätigbar sind. Aufgrund der hohen Seilkräfte muss bei derartigen Arbeitsmaschinen auf eine definierte und schonende Seilwicklung geachtet werden. Hierzu ist es beispielsweise bekannt, den Trommelkörper mit einer Rillung zu versehen, die nicht nur die geometrische Orientierung der unmittelbar auf der Rillung liegenden ersten Seilwickellage vorgibt, sondern im Falle von Seilwinden mit Mehrlagenwicklung auch die darüberliegenden Seilwickellagen beeinflusst und deren Seilwindungen gezielt führt. Für ein korrektes Auf- und Abwickeln des Seils und eine gleichmäßige Kraftverteilung ist es dabei wichtig, dass benachbarte Seilwicklungen unmittelbar, d.h. ohne Lücken und ohne Seilübersprünge aneinandergrenzen.

Der Bediener einer solchen Arbeitsmaschine muss daher insbesondere bei Mehrlagenwicklungen auf der Seiltrommel dauerhaft auf ein korrektes Wickelverhalten achten. Bei einem fehlerhaftem Wickelverhalten kann es zu teuren Schäden kommen. Dabei können das Seil oder die Winde beschädigt werden, was einen Reparatureinsatz erforderlich macht und Stillstandzeiten verursacht.

Zur Sicherstellung eines korrekten Wickelverhaltens sind Vorrichtungen bekannt, bei denen die Seiltrommel mittels einer Kamera erfasst und dem Bediener ein entsprechendes Bild auf einem Monitor in der Fahrerkabine angezeigt wird. Dabei werden fehlerhafte Wicklungen jedoch nicht immer zuverlässig durch den Bediener erkannt. Darüber hinaus ist die Zuverlässigkeit einer derartigen Überwachung von der Aufmerksamkeit und der Erfahrung des Bedieners abhängig.

Der vorliegenden Erfindung liegt daher die Aufgabe zugrunde, gattungsgemäße Vorrichtungen zur Überwachung des Wickelverhaltens bei solchen Seilwinden derart weiterzuentwickeln, dass eine zuverlässigere Erkennung von Wickelfehlern erfolgt.

Erfindungsgemäß wird diese Aufgabe durch eine Vorrichtung mit den Merkmalen des Anspruchs 1, durch ein Verfahren mit den Merkmalen des Anspruchs 14 und durch ein Computerprogrammprodukt mit den Merkmalen des Anspruchs 15 gelöst. Vorteilhafte Ausführungsformen der Erfindung ergeben sich aus den Unteransprüchen und der nachfolgenden Beschreibung.

Demnach wird ein einerseits eine Vorrichtung zur Überwachung des Wickelverhaltens eines Seils auf einer Seilwinde vorgeschlagen, welche eine Seilwinde mit einer drehbaren Seiltrommel umfasst, auf der ein Seil auf- und abwickelbar gelagert ist. Bei der Seilwinde handelt es sich vorzugsweise um eine Mehrlagenwinde, bei der mehrere Seilwickellagen übereinanderliegen. Die Seiltrommel kann zur definierten Führung der Seilwindungen auf ihrer Oberseite Rillen aufweisen, beispielsweise eine Lebus- bzw. Sinus-Rillung. Bei der Seilwinde kann es sich um eine Hubseilwinde oder eine Abspannwinde einer Arbeitsmaschine handeln. Die Seilwinde kann einen Antrieb zum bidirektionalen rotatorischen Antreiben der Seiltrommel aufweisen.

Die Vorrichtung umfasst mindestens eine Sensoreinheit (z.B. eine Kamera), welche zweidimensionale Aufnahmen von Seilwindungen auf der Seiltrommel aufzeichnet. Die mindestens eine Sensoreinheit besitzt vorzugsweise einen Aufnahmebereich, der die gesamte Seiltrommel abdeckt. Es kann genau eine Sensoreinheit oder aber mehrere Sensoreinheiten, die aus unterschiedlichen Blickwinkeln Aufnahmen von Seilwindungen auf der Seiltrommel aufnehmen, vorgesehen sein.

Erfindungsgemäß umfasst die Vorrichtung eine Analyseeinheit, welche die Aufnahmen der mindestens einen Sensoreinheit empfängt und dazu eingerichtet ist, mindestens zwei unterschiedliche Analyseregionen in den Aufnahmen zu definieren und diese unabhängig voneinander auf ein Vorliegen einer fehlerhaften Seilwicklung bzw. eines Wickelfehlers zu analysieren. Die Analyseregionen, welche auch als "Regions of Interest" bzw. "ROI" bezeichnet werden können, bilden jeweils mindestens eine Seilwindung ganz oder teilweise ab, wobei die unterschiedlichen Analyseregionen insbesondere zumindest teilweise unterschiedliche Abschnitte der Seilwindungen und/oder unterschiedliche Seilwindungen abbilden.

Die Auswertung der Analyseregionen erfolgt mittels eines geeigneten Algorithmus oder mehrerer Algorithmen durch die Analyseeinheit. Der oder die zur Wickellagenfehlererkennung eingesetzten Algorithmen können auf Methoden des Machine Learning basieren und optional auf die überwachte Seiltrommel bzw. auf die Erkennung von für diese Art von Seiltrommel typischen Wickelfehlern trainiert sein. Dadurch kann eine zuverlässigere automatisierte Fehlererkennung erreicht werden, die nicht auf der Aufmerksamkeit oder der Erfahrung eines menschlichen Bedieners basiert.

Die Segmentierung des überwachten Wickelbildes in mehrere Analyseregionen ermöglicht die zielgenaue Überwachung von unterschiedlichen Wickelfehlern, die für die jeweiligen Seilwickellagen- bzw. Trommelregionen typisch sind. So können beispielsweise Lücken oder Seilübersprünge in einer Seilwickellage gut an den radialen Randbereichen erkannt werden, während eine Stapelung mehrerer Seilwindungen eher an den axialen Endabschnitten der Seiltrommel, im Bereich der typischen axialen Begrenzungswände auftritt. Ferner kann der Seileintrittspunkt (d.h. die Stelle, an der das Seil tangential von der Seiltrommel ausläuft) zielgerichtet überwacht werden.

Der Ausdruck "fehlerhafte Seilwicklung" ist nicht auf Fehler innerhalb einer Seilwickellage beschränkt, sondern kann auch einen Fehler bzw. eine unzulässige Abweichung eines von der Seiltrommel auslaufenden Seilabschnitts (z.B. Auslaufen im falschen Winkel oder Seilflattern) umfassen.

Die Definition der Analyseregionen kann anhand festgelegter und beispielsweise in der Analyseeinheit oder einer damit verbundenen Speichereinheit hinterlegter Parameter erfolgen, sodass die "Definition" auch einfach nur in einer Anwendung bzw. Berücksichtigung festgelegter Bildbereiche oder Parameter bestehen kann.

In einer möglichen Ausführungsform ist vorgesehen, dass mindestens eine Sensoreinheit eine Kamera (z.B. eine Schwarz-Weiß-Kamera oder eine Farbkamera) ist, die zweidimensionale Bilder von Seilwindungen auf der Seiltrommel aufzeichnet. Es können mehrere Kameras Bilder aus unterschiedlichen Blickwinkeln aufnehmen, um Wickelfehler auf einer größeren Umfangsfläche der Seiltrommel zu überwachen.

Alternativ oder zusätzlich zu einer oder mehreren Kameras kann ein anderer Typ von Sensoreinheit wie beispielsweise LIDAR zum Einsatz kommen.

In einer weiteren möglichen Ausführungsform ist vorgesehen, dass die Aufnahmerichtung mindestens einer Sensoreinheit senkrecht auf eine Drehachse der Seiltrommel steht. Dadurch ergibt sich eine Draufsicht auf die abgebildete Seite der Seiltrommel, wobei die Aufnahmerichtung vorzugsweise die Drehachse der Seiltrommel schneidet. Vorzugsweise steht die Aufnahmerichtung in einem Winkel und somit nicht parallel zu einem von der Seiltrommel tangential auslaufenden Seilabschnitt, insbesondere in einem senkrechten Winkel, sodass sich eine Draufsicht auf den auslaufenden Seilabschnitt ergibt, welcher Winkelabweichungen besonders gut erkennen lässt.

Alternativ könne die die Aufnahmerichtung mindestens einer Sensoreinheit auch in einem von 90° abweichenden Winkel auf die Drehachse der Seiltrommel stehen, sodass besagte Sensoreinheit schräg auf die Seiltrommel "schaut". Dies könnte für die Erkennung bestimmter Wickelfehler vorteilhaft sein. Es können mehrere Sensoreinheiten vorhanden sein, die in unterschiedlichen Winkeln auf die Seiltrommel ausgerichtet sind.

In einer weiteren möglichen Ausführungsform ist vorgesehen, dass eine Analyseregion einen radialen Randbereich der abgebildeten Seiltrommel umfasst und sich insbesondere über die gesamte axiale Länge der Seiltrommel erstreckt. Dadurch werden alle Seilwindungen der obersten Seilwickellage erfasst, und zwar in dem Bereich, in dem diese aus Sicht der Sensoreinheit hinter der Krümmung der Seiltrommel "abtauchen". In diesem Bereich ist eine besonders gute Erkennung von Lücken und/oder Seilübersprüngen zwischen den Seilwindungen möglich. Die Analyseregion besitzt bevorzugt eine rechteckige Form, kann prinzipiell aber eine beliebige reguläre oder irreguläre Form aufweisen.

Vorzugsweise sind zwei Analyseregionen an den beiden einander gegenüberliegenden radialen Randbereichen der abgebildeten Seiltrommel definiert und erstrecken sich insbesondere jeweils über die gesamte axiale Länge der Seiltrommel. Dadurch können Lücken und/oder Seilübersprünge zwischen Seilwindungen noch zuverlässiger erkannt werden. Die Analyseregionen können eine identische Form aufweisen.

In einer weiteren möglichen Ausführungsform ist vorgesehen, dass eine Analyseregion einen radial mittleren Bereich der abgebildeten Seiltrommel umfasst und sich insbesondere über die gesamte axiale Länge der Seiltrommel erstreckt. Vorzugsweise ist die Analyseregion so gewählt, dass sie radial auf Höhe eines Seileintrittspunkts eines von der Seiltrommel tangential auslaufenden Seilabschnitts liegt. Der Seileintrittspunkt ist derjenige Punkt der Seiltrommel bzw. der obersten Seilwickellage, von dem aus das Seil tangential von der Seiltrommel weggeführt ist. Beim Ab- und Aufspulen des Seils wandert der Seileintrittspunkt in axialer Richtung, d.h. parallel zur Trommeldrehachse entlang der Seiltrommel. Die Analyseregion ist insbesondere so gewählt, dass in jeder Wickelsituation der Seileintrittspunkt innerhalb der Analyseregion liegt. Mit dieser insbesondere rechteckigen Analyseregion lässt sich ein korrekter Seileinzug durch Erfassung des Seileintrittspunkts überwachen.

In einer weiteren möglichen Ausführungsform ist vorgesehen, dass die Analyseeinheit dazu eingerichtet ist, eine oder mehrere der bislang genannten Analyseregionen beim Auf- und Abwickeln des Seils in den Aufnahmen konstant zu halten, d.h. deren Anordnung und Form beim Auf- und Abwickeln des Seils nicht zu verändern.

In einer weiteren möglichen Ausführungsform ist vorgesehen, dass eine Analyseregion einen von der Seiltrommel tangential auslaufenden Seilabschnitt umfasst und sich insbesondere entlang des auslaufenden Seilabschnitts erstreckt. Die Analyseregion ist insbesondere so gewählt, dass sie den auslaufenden Seilabschnitt inklusive des Seileintrittspunkts beinhaltet. Mit dieser Analyseregion lässt sich insbesondere der Einlaufwinkel des Seils und ggf. ein korrekter Seileinzug überwachen. Alternativ oder zusätzlich lässt sich eine Bewegung des auslaufenden Seils (z.B. Seilflattern) überwachen. Die Analyseregion besitzt bevorzugt eine rechteckige Form, kann prinzipiell aber eine beliebige reguläre oder irreguläre Form aufweisen.

Da der genannte Seilabschnitt insbesondere in einem Winkel zur Trommeldrehachse von der Seiltrommel ausläuft, kann sich die Analyseregion ebenfalls in einem solchen Winkel, d.h. insbesondere parallel zu Seilabschnitt erstrecken.

Da sich der Seileintrittspunkt und somit der tangential auslaufende Seilabschnitt beim Auf- und Abwickeln des Seils naturgemäß in axialer Richtung entlang der Seiltrommel bewegt, ist die Analyseeinheit vorzugsweise dazu eingerichtet, die zuletzt genannte Analyseregion beim Auf- und Abwickeln des Seils mit dem Seileintrittspunkt, d.h. mit dem tangential auslaufenden Seilabschnitt in den Aufnahmen mitzubewegen. Dadurch wird sichergestellt, dass sich der tangential auslaufende Seilabschnitt beim Auf- oder Abwickeln nicht aus der betreffenden Analyseregion hinausbewegt.

Die Änderung bzw. Position der Analyseregion kann anhand von Bildbearbeitungsmethoden aus der Aufnahme selbst und/oder anhand von Daten mindestens eines weiteren Sensors (z.B. eines Winkelgebers oder eines Sensors zur Erfassung der abgespulten Seillänge) bestimmt werden.

In einer weiteren möglichen Ausführungsform ist vorgesehen, dass eine Analyseregion einen Endabschnitt einer obersten Seilwickellage auf der abgebildeten Seiltrommel umfasst. Somit liegt das Ende der obersten Seilwickellage in der genannten Analyseregion. Vorzugsweise erstreckt sich die Analyseregion über die gesamte radiale Breite der Seiltrommel, um die gesamte vom Blickwinkel der entsprechenden Sensoreinheit "sichtbare" letzte Seilwindung zu erfassen. Alternativ oder zusätzlich kann sich die Analyseregion über einen Teilbereich der axialen Länge der Seiltrommel erstrecken. Mit anderen Worten deckt die Analyseregion insbesondere nicht die gesamte oberste Seilwickellage, sondern nur deren Endbereich, welcher insbesondere den Seileintrittspunkt umfasst, ab. Diese Analyseregion ermöglicht insbesondere eine Erkennung von sogenannten Seilstapeln an den Enden der Seiltrommel (wo sich üblicherweise axiale Begrenzungswände der Seiltrommel befinden).

Da sich das axiale Ende der obersten Seilwickellage beim Auf- und Abwickeln des Seils naturgemäß in axialer Richtung entlang der Seiltrommel bewegt, ist die Analyseeinheit vorzugsweise dazu eingerichtet, die zuletzt genannte Analyseregion beim Auf- und Abwickeln des Seils mit dem Endabschnitt der obersten Seilwickellage in den Aufnahmen mitzubewegen. Dadurch wird sichergestellt, dass sich das Ende der obersten Seilwickellage beim Auf- oder Abwickeln nicht aus der Analyseregion hinausbewegt. Die Änderung bzw. Position der Analyseregion kann anhand von Bildbearbeitungsmethoden aus der Aufnahme selbst und/oder anhand von Daten mindestens eines weiteren Sensors (z.B. eines Winkelgebers oder eines Sensors zur Erfassung der abgespulten Seillänge) bestimmt werden.

In der erfindungsgemäßen Vorrichtung kann eine beliebige Kombination der zuvor beschriebenen Analyseregionen zum Einsatz kommen.

In einer weiteren möglichen Ausführungsform ist vorgesehen, dass die Analyseeinheit dazu eingerichtet ist, die Analyseregionen auf das Vorliegen einer Lücke in einer Seilwicklung, eines Seilübersprungs, eines fehlerhaften Seileinzugs, von Bewegungen eines tangential auslaufenden Seilabschnitts, eines fehlerhaften Seilabgangswinkels und/oder einer Seilstapelung zu analysieren, insbesondere mittels eines Machine-Learning-Algorithmus.

Alternativ oder zusätzlich kann die Analyseeinheit dazu eingerichtet sein, die Analyseregionen auf das Vorliegen einer Unterschreitung einer minimalen Anzahl von Seilwindungen zu analysieren, insbesondere mittels eines Machine-Learning-Algorithmus. So kann beispielsweise festgelegt sein, dass sich immer mindestens drei (oder eine beliebige andere Zahl von) Sicherheitswindungen auf der Seiltrommel befinden müssen.

Alternativ oder zusätzlich kann die Analyseeinheit dazu eingerichtet sein, die Analyseregionen auf das Vorliegen einer Unterschreitung einer Überschreitung einer maximalen Anzahl von Seillagen zu analysieren, insbesondere mittels eines Machine-Learning-Algorithmus. Wird durch den Betreiber der Arbeitsmaschine beispielsweise ein zu langes Seil verwendet, kann dies zu Schäden an den Seiltrommelwänden (d.h. den axialen Begrenzungswänden der Seiltrommel) führen, wenn sich zu viele Wicklungen bzw. Seillagen auf der Seiltrommel befinden.

Für unterschiedliche Analyseregionen können unterschiedliche Algorithmen zum Einsatz kommen. Diese können über unterschiedliche Machine-Learning-Algorithmen analysiert werden und/oder auf unterschiedlichen Trainingsdaten basieren.

In einer weiteren möglichen Ausführungsform ist vorgesehen, dass die Analyseeinheit dazu eingerichtet ist, bei Erkennung einer fehlerhaften Seilwicklung eine Warnung über eine Anzeigeeinheit auszugeben. Dadurch kann der Bediener der Arbeitsmaschine frühzeitig auf eine Abweichung hingewiesen werden, sodass dieser rechtzeitig eingreifen und beispielsweise die Seilwinde stoppen kann. Alternativ oder zusätzlich zu einer optischen Warnung kann eine akustische Warnung ergehen.

Vorzugsweise wird dem Bediener auf einem Monitor eine zweidimensionale Aufnahme bzw. ein Bild der mindestens einen Sensoreinheit angezeigt, welche die aktuelle Situation Seiltrommel zeigt. Hierbei kann es sich um ein Live-Bild oder einen Live-Videostream handeln. Optional kann die Analyseeinheit dazu eingerichtet sein, auf dieser Anzeige ein Overlay von Regionen einzublenden, in denen ein Wicklungsfehler erkannt wurde. Dadurch kann dem Bediener ein solcher Fehler deutlich und auf intuitive Weise angezeigt werden.

Alternativ oder zusätzlich kann die Analyseeinheit dazu eingerichtet sein, bei Erkennung einer fehlerhaften Seilwicklung einen Steuerbefehl auszugeben, insbesondere zum automatischen Eingreifen in eine Steuerung eines Antriebs der Seilwinde (z.B. Bremsen oder Stoppen einer aktuellen Seilwindenbewegung).

In einer weiteren möglichen Ausführungsform ist vorgesehen, dass die Analyseeinheit dazu eingerichtet ist, die Analyseregionen sowohl unabhängig voneinander als auch in Kombination jeweils auf ein Vorliegen einer fehlerhaften Seilwicklung zu analysieren, insbesondere mittels eines Machine-Learning-Algorithmus. Neben der unabhängigen Analyse können die Informationen aus den einzelnen Analyseregionen also auch miteinander kombiniert werden, um die Zuverlässigkeit einer Fehlererkennung weiter zu verbessern. So kann sich ein Fehler bzw. eine Abweichung in Bezug auf den Seileintrittspunkt gleichzeitig in einer Winkelabweichung des tangential von der Seiltrommel auslaufenden Seilabschnitts niederschlagen und umgekehrt.

In einer weiteren möglichen Ausführungsform ist vorgesehen, dass die Vorrichtung eine Beleuchtungseinheit umfasst, mittels welcher ein von der mindestens einen Sensoreinheit erfasster Abschnitt der Seiltrommel beleuchtbar ist. Dadurch lassen sich Beleuchtungsfehler (beispielsweise verursacht durch Sonneneinstrahlung und/oder Schattenwurf) minimieren, was die Fehlererkennung verbessert.

In einer weiteren möglichen Ausführungsform ist vorgesehen, dass die Vorrichtung mehr als eine Seilwinde umfasst, deren Wickelbilder durch eine oder mehrere Sensoreinheiten (z.B. Kameras) erfasst und deren Aufnahmedaten durch die Analyseeinheit in der vorstehend dargestellten Weise analysiert werden. Die Anzahl der Seilwinden ist somit beliebig skalierbar. Die Seilwinden und entsprechenden Sensoreinheiten können an beliebigen, unterschiedlichen Stellen einer Arbeitsmaschine angeordnet sein.

In einer weiteren möglichen Ausführungsform ist vorgesehen, dass die Analyseeinheit eingerichtet ist, einen Zustand des Seils (z.B. Schadensbilder wie Korbbildung, Litzenbruch, Einzug in tiefere Lagen etc.) zu erkennen. Dies kann anhand der Daten einer beliebigen Analyseregion oder aller Analyseregionen oder über eine eigens hierfür definierte Analyseregion erfolgen. Vorteilhaft erfolgt das in abgespulter Position des Seils.

In einer weiteren möglichen Ausführungsform ist vorgesehen, dass die Seilwinde mindestens einen weiteren Sensor (z.B. einen Winkelgeber oder einen Sensor zur Seillängenmessung) umfasst und dessen Daten an die Analyseeinheit übermittelt werden. Dadurch ist es beispielsweise möglich, eine zu erwartende Position des Seils zu überwachen, da die erwartete Seilposition insbesondere von einem Drehwinkel der Seilwinde bzw. von der abgespulten Seillänge abhängt. Eine oder mehrere Analyseeinheiten können anhand der Daten des mindestens einen zusätzlichen Sensors definiert bzw. angepasst werden.

Alternativ oder zusätzlich kann mittels zusätzlicher Sensoren eine Erfassung des Bewegungszustands der Seiltrommel (z.B. ob eine Bewegung vorliegt und in welche Richtung) und/oder eine Erfassung weiterer Fehler (z.B. einen Seilübersprung über einen Trommelsteg nur in der ersten Seillage, eine Auswertung der Seillage über eine Seillängenmessung etc.) erfolgen.

Die Erfindung betrifft weiterhin eine Arbeitsmaschine mit einer erfindungsgemäßen Vorrichtung. Dabei ergeben sich offensichtlich dieselben Eigenschaften und Vorteile wie für die erfindungsgemäße Vorrichtung als solche, weshalb auf eine wiederholende Beschreibung verzichtet wird. Insbesondere gelten sämtliche zuvor für die erfindungsgemäße Vorrichtung beschriebenen Ausführungsformen und Merkmale auch für die erfindungsgemäße Arbeitsmaschine, in beliebiger Kombination.

Die Arbeitsmaschine umfasst eine Anzeigeeinheit, auf welcher Aufnahmen der mindestens einen Sensoreinheit und/oder Informationen betreffend eine durch die Analyseeinheit erkannte fehlerhafte Seilwicklung anzeigbar sind (beispielsweise als Overlay, wie zuvor beschrieben). Es können mehrere Anzeigeeinheiten vorgesehen sein. Eine Anzeigeeinheit kann in einer Fahrerkabine der Arbeitsmaschine angeordnet und/oder als mobiles Steuerungsgerät (z.B. Tablet-PC) ausgebildet sein.

Bei der Arbeitsmaschine kann es sich um einen stationären Kran (z.B. einen Turmdrehkran, Offshore-Kran oder Schiffskran), einen Mobilkran (z.B. einen Fahrzeugkran oder einen Gittermastkran), ein Tiefbaugerät (z.B. eine Vibrationsramme, eine Schlitzwandfräse oder eine Drehbohranlage), einen Seilbagger oder eine beliebige andere Arbeitsmaschine mit wenigstens einer Seilwinde handeln. Bei der überwachten Seilwinde kann es sich um eine Hubseilwinde (insbesondere zum Heben und Senken einer Last) oder eine Abspannseilwinde (insbesondere zum Ein- und Ausfahren einer Seilabspannung) handeln.

Die Erfindung betrifft weiterhin ein Verfahren zur Überwachung des Wickelverhaltens eines Seils auf einer Seilwinde einer erfindungsgemäßen Vorrichtung. Hierbei werden, wie dies bereits anhand der erfindungsgemäßen Vorrichtung beschrieben wurde, zweidimensionale Aufnahmen von Seilwindungen auf einer Seiltrommel der Seilwinde aufgezeichnet, wobei in den Aufnahmen wenigstens zwei unterschiedliche, jeweils mindestens eine Seilwindung ganz oder teilweise abbildende Analyseregionen definiert und diese unabhängig voneinander auf ein Vorliegen einer fehlerhaften Seilwicklung analysiert werden. Dabei ergeben sich offensichtlich dieselben Eigenschaften und Vorteile für die erfindungsgemäße Vorrichtung, weshalb auf eine wiederholende Beschreibung der einzelnen Eigenschaften und der möglichen optionalen Ausgestaltungen der Verfahrensschritte verzichtet wird. Sämtliche zuvor für die erfindungsgemäße Vorrichtung beschriebenen Ausführungsformen und Merkmale gelten auch für das erfindungsgemäße Verfahren, in beliebiger Kombination.

Die Erfindung betrifft weiterhin ein entsprechendes Computerprogrammprodukt zur Ausführung des erfindungsgemäßen Verfahrens, das Befehle umfasst, die bei der Ausführung des Programms bewirken, dass die auf die Steuereinheit bezogenen Schritte des oben beschriebenen Verfahrens von der Analyseeinheit der erfindungsgemäßen Vorrichtung ausgeführt werden. Vorzugsweise kann das Computerprogrammprodukt auf herkömmlichen Maschinensteuerungen betrieben werden, sodass keine Nachrüstung von Hardwarekomponenten notwendig ist. Das Computerprogrammprodukt kann Teil eines Assistenzsystems sein oder ein solches darstellen.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische Darstellung der erfindungsgemäßen Vorrichtung gemäß einem Ausführungsbeispiel; und
- Figur 2:: ein Ausführungsbeispiel einer Aufnahme der Seilwinde mit mehreren Analyseregionen.

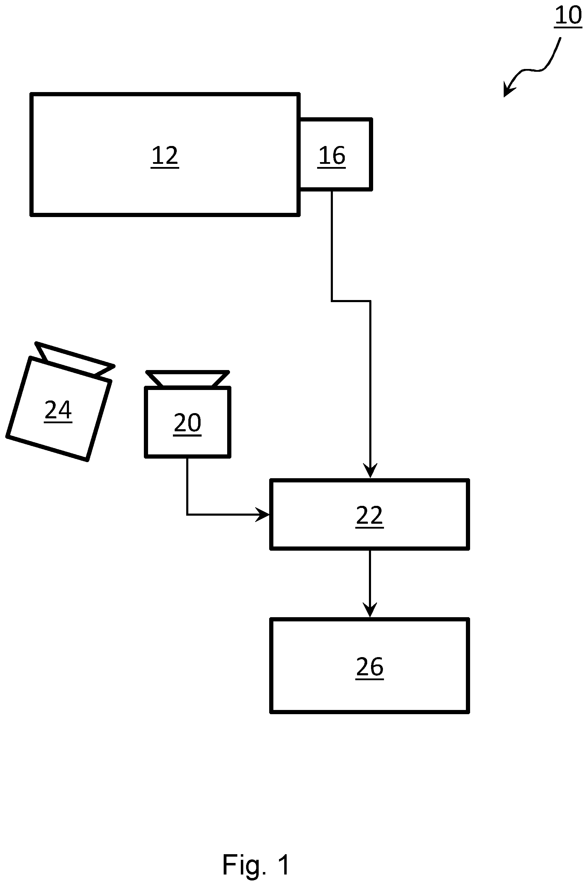

Die Figur 1 zeigt ein Ausführungsbeispiel der erfindungsgemäßen Vorrichtung 10 in einer schematischen Darstellung. Die Vorrichtung 10 umfasst eine Seilwinde mit einer über einen nicht dargestellten Antrieb rotatorisch antreibbaren Seiltrommel 12, auf welcher ein ebenfalls nicht gezeigtes Seil aufgewickelt ist. Hierbei handelt es sich bevorzugt um eine Seilwinde mit Mehrlagenwicklung, bei der mehrere Seilwickellagen aufeinanderliegen.

Eine Kamera 20 (= Sensoreinheit) erfasst das Wickelbild des Seils auf der Seiltrommel 12 und nimmt Bilder von der Seiltrommel 12 und dem darauf aufgewickelten Seils auf, wobei vorzugsweise die komplette Seiltrommel 12 erfasst wird. Alternativ können mehrere Kameras und/oder weitere Sensoreinheiten wie beispielsweise ein LIDAR-System zur Erfassung des Wickelbilds vorhanden sein. Die optische Achse der Kamera 20 steht bevorzugt senkrecht auf die Drehachse der Seiltrommel 12.

Eine Analyseeinheit 22 erhält die Bilddaten der Kamera 20 und wertet diese aus. Die Analyseeinheit 22 kann mit mindestens einer Anzeigeeinheit 26 verbunden sein, welche beispielsweise in einer Fahrerkabine einer die Vorrichtung 10 umfassenden Arbeitsmaschine angeordnet sein kann.

Optional kann die Vorrichtung 10 eine Beleuchtungseinheit 24 umfassen, die die Seiltrommel 12 bzw. die Seilwicklung im Erfassungsbereich der Kamera 20 beleuchtet, um die Bildqualität und Fehlererkennung zu verbessern und Belichtungsfehler (z.B. Sonneneinstrahlung, Schattenwurf) zu minimieren.

Optional kann die Vorrichtung einen oder mehrere weitere Sensoren 16 (z.B. einen Winkelgeber oder einen Seillängenmesser) umfassen, deren Daten ebenfalls an die Analyseeinheit 22 übermittelt und dem Überwachungsverfahren zugrunde gelegt werden können, beispielsweise zum Zwecke der Festlegung von Position und/oder Größe einer oder mehrerer Analyseregionen. Ferner können durch zusätzliche Sensoren 16 weitere Parameter ausgewertet werden, um bestimmte Fehler zu bestimmen (Seilübersprung, Auswertung der Seillage etc.).

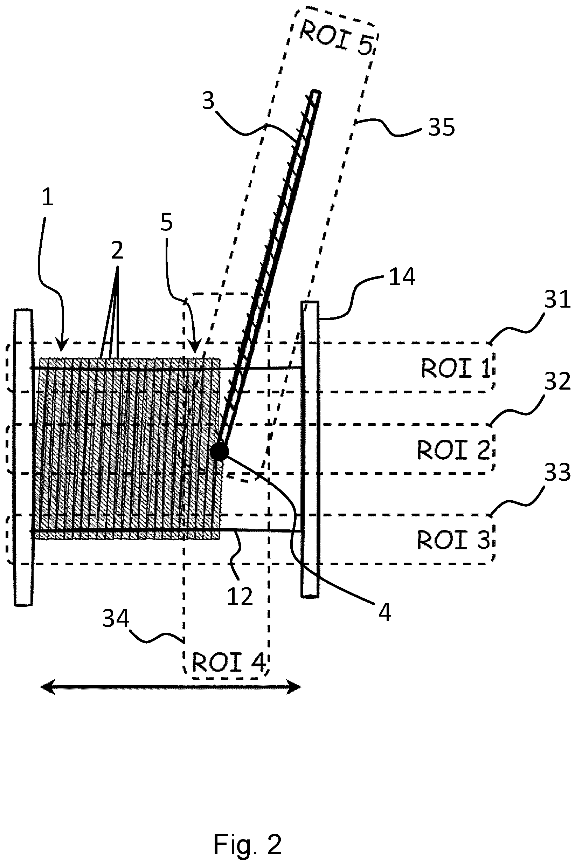

Das durch die Analyseeinheit 22 ausgeführte Analyseverfahren wird nachfolgend anhand des in der Figur 2 gezeigten Ausführungsbeispiels näher erläutert. Die Figur 2 zeigt dabei die Seiltrommel 12 mit aufgewickeltem Seil 1 aus Sicht der Kamera 20. Es sind die einzelnen Seilwindungen 2 zu erkennen. An einem (in der Fig. 2 rechten) Endbereich der betrachteten Seillage läuft das Seil 1 ausgehend von einem Seileintrittspunkt 4 tangential von der Seiltrommel 12 weg. Es ist nur der auslaufende Seilabschnitt 3 im Bereich der Seiltrommel 12 dargestellt. Der Winkel des tangential auslaufenden Seilabschnitts 3 kann durch eine nicht dargestellte Führungseinrichtung mechanisch vorgegeben sein, um ein kontrolliertes Auf- und Abwickeln des Seils 1 auf der Seiltrommel 12 zu gewährleisten.

Erfindungsgemäß analysiert die Analyseeinheit 22 nicht (nur) das gesamte von der Kamera 20 gelieferte Bild als Ganzes, sondern unterteilt dieses in mehrere Bildbereiche bzw. Analyseregionen 31-35, die über entsprechende Algorithmen separat auf Wickelfehler untersucht werden.

Eine erste Analyseregion 31 kann an einem radialen Randbereich (in der Fig. 2 der obere Rand) der Seiltrommel 12 definiert sein und sich über deren gesamte axiale Länge (in der Fig. 2 die horizontale Erstreckung der Seiltrommel 12) erstrecken, sodass alle sichtbaren, d.h. obenliegenden Seilwindungen 2 in dieser vorzugsweise rechteckigen ersten Analyseregion 31 liegen. Die erste Analyseregion 31 deckt vorzugsweise nur einen Teil der Seiltrommelbreite (in der Fig. 2 die vertikale Erstreckung der Seiltrommel 12) ab. Die erste Analyseregion 31 ermöglicht eine effektive Erkennung von Seilübersprüngen und/oder Lücken zwischen den Seilwindungen 2.

Bevorzugt ist eine insbesondere identisch zur ersten Analyseregion 31 ausgebildete dritte Analyseregion 33 am gegenüberliegenden radialen Rand (in der Fig. 2 der untere Rand) der Seiltrommel 12 vorgesehen, um die Erkennung von Lücken und/oder Seilübersprüngen zu verbessern.

Eine zweite Analyseregion 32 kann in einem mittleren radialen Bereich der Seiltrommel 12 (insbesondere parallel zur und im Bereich der Drehachse der Seiltrommel 12) entlang der gesamten axialen Länge der Seiltrommel 12 verlaufen. Die zweite Analyseregion 32 deckt vorzugsweise nur einen Teil der Seiltrommelbreite ab. Die Kamera 10 ist vorzugsweise so angeordnet und ausgerichtet, dass sich der Seileintrittspunkt 4 stets innerhalb der zweiten Analyseregion 32 befindet und sich beim Auf- und Abwickeln des Seils 1 innerhalb der zweiten Analyseregion 32 bewegt. Letztere ermöglicht somit eine Überwachung des korrekten Seileinzugs.

Eine vierte Analyseregion 34 kann einen Endabschnitt 5 der obersten Seilwickellage auf der Seiltrommel 12 (bei einer einzigen Seilwickellage ist dies dann der Endabschnitt dieser Seilwickellage) umfassen. Der genannte Endabschnitt 5 umfasst eine oder mehrere der letzten Seilwindungen 2 vor dem Seileintrittspunkt 4. Die vierte Analyseregion 34 erstreckt sich insbesondere nicht über die gesamte axiale Länge der Seiltrommel 12, sondern nur über eine oder wenige Seilwindungen 2 des genannten Endabschnitts 5. Die vierte Analyseregion 34 ermöglicht insbesondere eine Erkennung von Seilstapeln an axialen Begrenzungswänden 14 der Seiltrommel 12 (= Seiltrommelwände).

Die vierte Analyseregion 34 bewegt sich vorzugsweise beim Auf- und Abwickeln des Seils 1 mit dem Endabschnitt 5 mit, insbesondere parallel zur Drehachse der Seiltrommel 12, d.h. in axialer Richtung (vgl. Doppelpfeil in Fig. 2). Die Parametrisierung der vierten Analyseregion 34 erfolgt hierbei vorzugsweise anhand einer Seillängenmessung und/oder eine Winkelmessung der Seiltrommel 12 über mindestens einen zusätzlichen Sensor 16.

Eine fünfte Analyseregion 35 kann sich entlang des tangential auslaufenden Seilabschnitts 3 erstrecken und ggf. auch den Seileintrittspunkt 4 umfassen. Die fünfte Analyseregion 35 ermöglicht eine Erkennung, ob der Seilabgangswinkel (d.h. der Winkel zwischen dem tangential auslaufenden Seilabschnitt 3 und der Drehachse der Seiltrommel 12) in einem zulässigen Bereich liegt und/oder ob es unzulässige Bewegungen des Seils gibt (sog. Seilflattern). Die fünfte Analyseregion 35 bewegt sich vorzugsweise beim Auf- und Abwickeln des Seils 1 mit dem Seileintrittspunkt 4 bzw. mit dem tangential auslaufenden Seilabschnitt 3 mit, insbesondere parallel zur Drehachse der Seiltrommel 12, d.h. in axialer Richtung. Die Parametrisierung der fünften Analyseregion 35 erfolgt hierbei vorzugsweise anhand einer Seillängenmessung und/oder eine Winkelmessung der Seiltrommel 12 über mindestens einen zusätzlichen Sensor 16.

Die gezeigten Analyseregionen 31-35 sind beispielhaft und können in einer beliebigen Kombination zur Anwendung kommen. Sie hängen aber insbesondere von der jeweiligen Seiltrommel 12 und Seilführung ab. Es sind weitere, in der Figur 2 nicht gezeigte Analyseregionen denkbar. Abweichend von den in Fig. 2 gezeigten rechteckigen Analyseregionen 31-35 können diese auch eine andere Form aufweisen.

Die Analyseregionen 31-35 werden unabhängig voneinander, vorzugsweise zusätzlich aber auch in Kombination durch die Analyseeinheit 22 ausgewertet. Die Auswertung der einzelnen Subsysteme bzw. Analyseregionen 31-35 erfolgt dabei vorzugsweise mittels Analysealgorithmen, die auf Machine-Learning-Methoden oder künstlicher Intelligenz basieren

Wird in wenigstens einer Analyseregion 31-35 ein Wickelfehler erkannt, wird dem Bediener auf der Anzeigeeinheit 26 vorzugsweise eine entsprechende Information (z.B. in Form einer Warnung oder eines Overlays auf ein Kamera- bzw. Videobild der Seiltrommel 12) angezeigt.

Die Kamera 20 liefert vorzugsweise einen Videostream der Seiltrommel 12, welcher auf der Anzeigeeinheit 26 angezeigt wird. Wird dem Bediener über die Analyseeinheit 22 ein erkannter Fehler gemeldet, kann der Bediener in weiterer Folge auf dem Videobild des Kamerastreams das Wickelverhalten direkt überprüfen. Optional kann hierbei ein Overlay des Bildes den Bereich hervorheben, bei dem der Algorithmus eine Abweichung bzw. einen Wickelfehler entdeckt hat.

Als zusätzliche Funktion kann durch die Analyseeinheit 22 optional festgestellt werden, ob eine vorgeschriebene minimale Anzahl von Seilwindungen (beispielsweise drei) auf der Seiltrommel 12 gewährleistet sind. Bei einer zu geringen Anzahl an Sicherheitswindungen könnte sich das Seil 1 von der Seiltrommel 12 lösen. Alternativ oder zusätzlich kann eine Überschreitung einer maximalen Anzahl von Seillagen auf der Seiltrommel 12 überwacht werden, um eine Beschädigung der Seiltrommelwände zu verhindern.

### Bezugszeichenliste:

- 1: Seil
- 2: Seilwindung
- 3: Tangential auslaufender Seilabschnitt
- 4: Seileintrittspunkt
- 5: Endabschnitt der obersten Seilwickellage
- 10: Vorrichtung
- 12: Seiltrommel
- 14: Axiale Begrenzungswand
- 16: Sensor(en)
- 20: Sensoreinheit
- 22: Analyseeinheit
- 24: Beleuchtungseinheit
- 26: Anzeigeeinheit
- 31: Erste Analyseregion
- 32: Zweite Analyseregion
- 33: Dritte Analyseregion
- 34: Vierte Analyseregion
- 35: Fünfte Analyseregion

## Patentansprüche

1. Vorrichtung (10) zur Überwachung des Wickelverhaltens eines Seils auf einer Seilwinde, umfassend eine Seilwinde, insbesondere Mehrlagenwinde, mit einer drehbaren Seiltrommel (12), auf der ein Seil (1) auf- und abwickelbar gelagert ist, und mindestens eine Sensoreinheit (20), welche zweidimensionale Aufnahmen von Seilwindungen (2) auf der Seiltrommel (12) aufzeichnet, **gekennzeichnet durch**
eine Analyseeinheit (22), welche die Aufnahmen der mindestens einen Sensoreinheit (20) empfängt und dazu eingerichtet ist, mindestens zwei unterschiedliche, jeweils mindestens eine Seilwindung (2) ganz oder teilweise abbildende Analyseregionen (31, 32, 33, 34, 35) in den Aufnahmen zu definieren und diese unabhängig voneinander auf ein Vorliegen einer fehlerhaften Seilwicklung zu analysieren.

2. Vorrichtung (10) nach Anspruch 1, wobei mindestens eine Sensoreinheit (20) eine Kamera ist, welche zweidimensionale Bilder von Seilwindungen (2) auf der Seiltrommel (12) aufzeichnet.

3. Vorrichtung (10) nach Anspruch 1 oder 2, wobei die Aufnahmerichtung mindestens einer Sensoreinheit (20) senkrecht auf eine Drehachse der Seiltrommel (12) und vorzugsweise in einem Winkel, insbesondere einem senkrechten Winkel, zu einem von der Seiltrommel (12) tangential auslaufenden Seilabschnitt (3) steht.

4. Vorrichtung (10) nach einem der vorhergehenden Ansprüche, wobei eine Analyseregion (31, 33) einen radialen Randbereich der abgebildeten Seiltrommel (12) umfasst und sich insbesondere über die gesamte axiale Länge der Seiltrommel (12) erstreckt, wobei vorzugsweise zwei Analyseregionen (31, 33) einander gegenüberliegende radiale Randbereiche der abgebildeten Seiltrommel (12) umfassen und sich insbesondere jeweils über die gesamte axiale Länge der Seiltrommel (12) erstrecken.

5. Vorrichtung (10) nach einem der vorhergehenden Ansprüche, wobei eine Analyseregion (32) einen radial mittleren Bereich der abgebildeten Seiltrommel (12) umfasst und sich insbesondere über die gesamte axiale Länge der Seiltrommel (12) erstreckt, wobei die Analyseregion (32) vorzugsweise so gewählt ist, dass sie radial auf Höhe eines Seileintrittspunkts (4) eines von der Seiltrommel (12) tangential auslaufenden Seilabschnitts (3) liegt.

6. Vorrichtung (10) nach Anspruch 4 oder 5, wobei die Analyseeinheit (22) dazu eingerichtet ist, die Analyseregion(en) (31, 32, 33) beim Auf- und Abwickeln des Seils (1) in den Aufnahmen konstant zu halten.

7. Vorrichtung (10) nach einem der vorhergehenden Ansprüche, wobei eine Analyseregion (35) einen von der Seiltrommel (12) tangential auslaufenden Seilabschnitt (3) umfasst und sich insbesondere entlang des auslaufenden Seilabschnitts (3) und/oder in einem Winkel zur Drehachse der Seiltrommel (12) erstreckt, wobei die Analyseeinheit (22) vorzugsweise dazu eingerichtet ist, die Analyseregion (35) beim Auf- und Abwickeln des Seils (1) mit dem tangential auslaufenden Seilabschnitt (3) in den Aufnahmen mitzubewegen.

8. Vorrichtung (10) nach einem der vorhergehenden Ansprüche, wobei eine Analyseregion (34) einen Endabschnitt einer obersten Seilwickellage auf der abgebildeten Seiltrommel (12) umfasst und sich insbesondere über die gesamte radiale Breite und/oder nur über einen Teil der axialen Länge der Seiltrommel (12) erstreckt, wobei die Analyseeinheit (22) vorzugsweise dazu eingerichtet ist, die Analyseregion (34) beim Auf- und Abwickeln des Seils (1) mit dem Endabschnitt der obersten Seilwickellage in den Aufnahmen mitzubewegen.

9. Vorrichtung (10) nach einem der vorhergehenden Ansprüche, wobei die Analyseeinheit (22) dazu eingerichtet ist, die Analyseregionen (31, 32, 33, 34, 35) auf das Vorliegen einer Lücke zwischen zwei benachbarten Seilwindungen (2), eines Seilübersprungs, eines fehlerhaften Seileinzugs, von Bewegungen eines tangential auslaufenden Seilabschnitts (3), eines fehlerhaften Seilabgangswinkels, einer Unterschreitung einer minimalen Anzahl von Seilwindungen, einer Überschreitung einer maximalen Anzahl von Seillagen und/oder einer Seilstapelung zu analysieren, insbesondere mittels eines Machine-Learning-Algorithmus.

10. Vorrichtung (10) nach einem der vorhergehenden Ansprüche, wobei die Analyseeinheit (22) dazu eingerichtet ist, bei Erkennung einer fehlerhaften Seilwicklung eine Warnung über eine Anzeigeeinheit (26) auszugeben und/oder einen Steuerbefehl, insbesondere zum automatischen Eingreifen in eine Steuerung der Seilwinde, auszugeben.

11. Vorrichtung (10) nach einem der vorhergehenden Ansprüche, wobei die Analyseeinheit (22) dazu eingerichtet ist, die Analyseregionen (31, 32, 33, 34, 35) sowohl unabhängig voneinander also auch in Kombination jeweils auf ein Vorliegen einer fehlerhaften Seilwicklung zu analysieren, insbesondere mittels eines Machine-Learning-Algorithmus.

12. Vorrichtung (10) nach einem der vorhergehenden Ansprüche, wobei die Analyseeinheit (22) dazu eingerichtet ist, den Zustand des Seiles in abgespulter Position zu erfassen, um so Seilschäden zu erkennen.

13. Arbeitsmaschine, vorzugsweise Kran, Tiefbaugerät oder Seilbagger, mit einer Vorrichtung (10) nach einem der vorhergehenden Ansprüche und mit einer Anzeigeeinheit (26), auf welcher Aufnahmen der mindestens einen Sensoreinheit (20) und/oder Informationen betreffend eine durch die Analyseeinheit (22) erkannte fehlerhafte Seilwicklung und/oder Zustand des Seiles anzeigbar sind, wobei es sich bei der Seilwinde vorzugsweise um eine Hubseilwinde oder eine Abspannseilwinde handelt.

14. Verfahren zur Überwachung des Wickelverhaltens eines Seils (1) auf einer Seilwinde einer Vorrichtung (10) nach einem der Ansprüche 1 bis 12, wobei zweidimensionale Aufnahmen von Seilwindungen (2) auf einer Seiltrommel (12) der Seilwinde aufgezeichnet werden, wobei in den Aufnahmen wenigstens zwei unterschiedliche, jeweils mindestens eine Seilwindung (2) ganz oder teilweise abbildende Analyseregionen (31, 32, 33, 34, 35) definiert und diese unabhängig voneinander auf ein Vorliegen einer fehlerhaften Seilwicklung analysiert werden.

15. Computerprogrammprodukt umfassend Befehle, die bei der Ausführung des Programms bewirken, dass die Schritte des Verfahrens nach dem vorhergehenden Anspruch von der Analyseeinheit (22) der Vorrichtung (10) nach einem der Ansprüche 1 bis 12 ausgeführt werden.
